Europäisches Patentamt

European Patent Office

Office européen des brevets

(19)

(11) Veröffentlichungsnummer: **0 375 616**
**A1**

## EUROPÄISCHE PATENTANMELDUNG

(21) Anmeldenummer: 89810950.9

(51) Int. Cl.⁵: **F23J 15/00, B01D 53/36**

(22) Anmeldetag: 13.12.89

(30) Priorität: 22.12.88 CH 4766/88

(43) Veröffentlichungstag der Anmeldung:
27.06.90 Patentblatt 90/26

(84) Benannte Vertragsstaaten:
AT BE DE ES FR GB IT NL SE

(71) Anmelder: GEBRÜDER SULZER
AKTIENGESELLSCHAFT
Zürcherstrasse 9
CH-8401 Winterthur(CH)

(72) Erfinder: Sauter, Josef
Schulstrasse 19
CH-8583 Sulgen(CH)

(54) Einrichtung zum Entsticken von Rauchgasen in einer fossil beheizten Dampferzeugeranlage.

(57) Die Einrichtung weist eine Vorrichtung (12) zum Zuführen von Chemikalien in den heissen Rauchgasstrom auf, die auf Stickoxyde reduzierend wirken und dabei einen Amoniakrest übrig lassen. Sie weist ferner eine dieser Zuführvorrichtung (12) nachgeschaltete, katalytisch wirkende Vorrichtung zum Verringern des Amoniakrestes oder -Schlupfes auf, die rauchgasseitig in mindestens einer vom Rauchgasstrom (19) umströmten Heizfläche (9') des Dampferzeugers angeordnet ist.

EP 0 375 616 A1

## Einrichtung zum Entsticken von Rauchgasen in einer fossil beheizten Dampferzeugeranlage

Die Erfindung betrifft eine Einrichtung zum Entsticken von Rauchgasen in einer fossil beheizten, mehrere nacheinander vom Rauchgasstrom umströmte Heizflächen aufweisenden Dampferzeugungsanlage, mit einer Vorrichtung zum Zuführen von auf Stickoxide reduzierend wirkenden und dabei einen Ammoniakrest übrig lassenden Chemikalien in den heissen Rauchgasstrom sowie mit einer dieser Zuführvorrichtung nachgeschalteten, katalytisch wirkenden Vorrichtung zum Verringern des Ammoniakrestes oder -schlupfes. Als reduzierende Chemikalien kommen Ammoniak $NH_3$ und Amine, z.B. Harnstoff $CO(NH_2)_2$, in Frage.

Bei einer bekannten Einrichtung dieser Art findet eine thermische Entstickung durch Zufuhr von Ammoniak statt, wobei durch chemische Reaktion die Stickoxide NO und/oder $NO_2$ in Stickstoff $N_2$ und Wasser $H_2O$ umgewandelt werden. Diese Reaktion spielt sich nur bei hohen Temperaturen ab, und zwar innerhalb des Temperaturbereiches zwischen etwa 600 und 1200 °C. Das Ammoniak wird mit Hilfe eines Tragmediums, wie Dampf, Luft, Rauchgas oder Wasser eingedüst, und zwar je nach Art der Feuerung des Dampferzeugers in den Verbrennungsraum oder in freie Räume zwischen zwei Heizflächen, die in Form von Rohrbündeln im Rauchgasstrom angeordnet sind. Mit dem thermischen Verfahren werden Entstickungsgrade von ungefähr 70% erreicht. Der Ammoniakrest - der sogenannte Ammoniakschlupf - wird in der nachgeschalteten, katalytisch wirkenden Vorrichtung stark verringert, damit beim Abkühlen des Rauchgasstroms unterhalb etwa 250 °C das Bilden von Salzen, wie Ammoniumhydrogensulfat, Ammoniumsulfat oder Ammoniumchlorit, und die Emission von chemisch unverändertem Ammoniak über den Kamin in die Atmosphäre vermindert wird.

Die katalytisch wirkende Vorrichtung zum Verringern des Ammoniakschlupfes besteht aus Formkörpern aus Katalysatormaterial, die im Rauchgasstrom in einem entsprechend niedrigen Temperaturbereich, d.h. bei etwa 300 °C eingebaut werden. Für diesen Einbau muss in der Dampferzeugungsanlage entsprechender Raum vorhanden sein, was das Erstellen einer neuen Dampferzeugungsanlage entsprechend verteuert oder ein Nachrüsten einer bestehenden Dampferzeugungsanlage sehr erschwert.

Ausser den Einrichtungen zur thermischen Entstickung gibt es auch Anlagen, in denen das Entsticken der Rauchgase auf katalytische Weise erfolgt, indem der Rauchgasstrom nach Verlassen des Dampferzeugers und vor Eintritt in einen Luftvorwärmer, bei etwa 300 °C, durch einen besonderen Anlageteil geleitet wird, der mit Katalysatormaterial bestückt ist und dem Ammoniak, gemischt mit einem Tragmedium, zugeführt wird. Auch hier ergibt sich ein entsprechend grosser Raumbedarf für den genannten Anlageteil.

Der Erfindung liegt die Aufgabe zugrunde, eine Entstickungseinrichtung der eingangs genannten Art auf konstruktiv einfache Weise so zu verbessern, dass für das Verringern des Ammoniakschlupfes im wesentlichen kein zusätzlicher Platz beansprucht wird.

Diese Aufgabe wird erfindungsgemäss dadurch gelöst, dass die katalytisch wirkende Vorrichtung rauchgasseitig in mindestens einer Heizfläche angeordnet ist. Hierbei wird also das katalytisch wirksame Material innerhalb einer bestehenden Heizfläche untergebracht, vorzugsweise als Beschichtung der Heizfläche. Hierdurch wird es also möglich, eine mindestens gleich gute Verringerung des Ammoniakschlupfes zu erreichen, ohne dass dazu zusätzlicher Platz benötigt würde. Im Gegensatz zur vorher erwähnten Anlage mit katalytischer Entstickung ist bei der katalytisch wirkenden Vorrichtung nach der Erfindung keine Zufuhr von Stickoxide reduzierenden Chemikalien vorhanden.

Einige Ausführungsbeispiele der Erfindung werden in der folgenden Beschreibung anhand der Zeichnung näher erläutert. Es zeigen, jeweils schematisch vereinfacht:

Fig. 1 einen Vertikalschnitt durch eine Dampferzeugeranlage,

Fig. 2 einen Querschnitt durch einen Teil eines Rohrbündels,

Fig. 3 ebenfalls einen Querschnitt durch einen Teil eines abgewandelten Rohrbündels,

Fig. 4 einen Schnitt entsprechend der Linie IV -IV in Fig. 3,

Fig. 5 und 6 den Fig. 3 und 4 entsprechende Schnitte durch ein weiteres abgewandeltes Rohrbündel,

Fig. 7 einen Vertikalschnitt durch einen Dampferzeuger anderer Bauart als in Fig. 1 und

Fig. 8 einen Vertikalschnitt durch einen Teil einer weiter abgewandelten Dampferzeugeranlage.

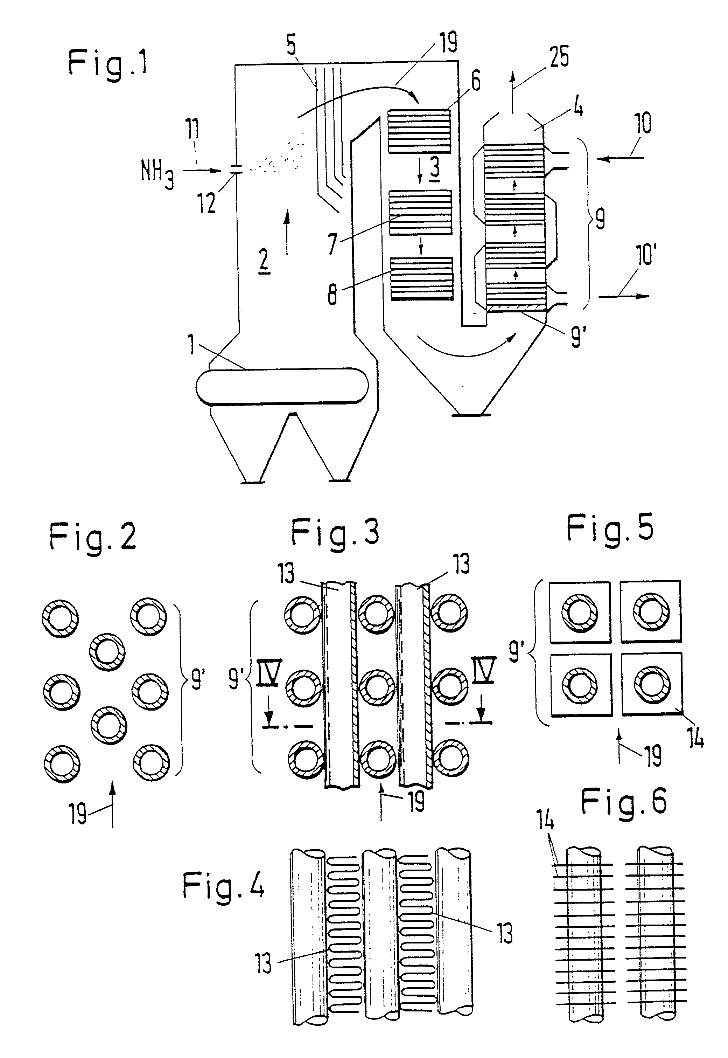

Gemäss Fig. 1 ist die Dampferzeugeranlage mit einer Wanderrost-Feuerung 1 zum Verbrennen von Kohle ausgestattet. Oberhalb dieser Feuerung 1 befindet sich die Brennkammer 2, deren Wände in bekannter, nicht dargestellter Weise mit Verdampferrohren bekleidet sind. Am oberen Ende der Brennkammer 2 schliesst sich ein vertikaler Rauchgaszug 3 an, der an seinem unteren Ende in einen weiteren vertikalen Rauchgaszug 4 übergeht. Nahe dem Uebergang von der Brennkammer 2 zum Rauchgaszug 3 ist ein im wesentlichen vertikales, vom Rauchgas (Pfeil 19) umströmtes Rohrbündel 5 angeordnet, das z.B. eine Ueberhitzerheizfläche bildet. Im vom Rauchgas abwärts durchströmten Rauchgaszug 3 selbst sind drei weitere Heizflächen 6,7 und 8 in Form von Rohrbündeln angeordnet, die von Rauchgas umströmt werden und z.B. eine weitere Ueberhitzerheizfläche bzw. Economiser-Heizflächen bilden.

Im weiteren, vom Rauchgas aufwärts durchströmten Rauchgaszug 4 ist eine Luftvorwärmerheizfläche 9, auch Luvo genannt, untergebracht, die aus vier Rohrbündeln besteht, deren Rohre von der Verbrennungsluft durchströmt sind. Die Verbrennungsluft wird dem in Fig. 1 obersten Bündel zugeführt (Pfeil 10). Sie durchströmt nacheinander die weiteren Rohrbündel des Luvos 9 und wird dabei von dem die Bündel umströmenden Rauchgas erwärmt. Die vorgewärmte Verbrennungsluft (Pfeil 10') wird dann der Feuerung 1 zugeführt.

Zum Entsticken der in der Brennkammer 2 entstehenden Rauchgase wird im oberen Bereich der Brennkammer 2 Ammoniak zugeführt (Pfeil 11), wozu in der Brennkammerwand mehrere über den Brennkammerumfang verteilte Düsen 12 vorgesehen sind, denen ausser dem Ammoniak auch ein nicht näher dargestelltes Tragmedium zugeführt wird. In Fig. 1 ist der Einfachheit halber nur eine Düse dargestellt. Durch das Ammoniak werden die Stickoxide des Rauchgases in $N_2$ und $H_2O$ umgewandelt. Das eingedüste Ammoniak reagiert mit den Stickoxiden normalerweise nicht allein und vollständig entsprechend den chemischen Gleichgewichtsbedingungen; es verbleibt ein Teil des Ammoniaks im Rauchgas und wird mit diesem mitgeführt. Dieser Ammoniakrest, auch Ammoniakschlupf genannt, wird auf katalytischem Wege in dem in Fig. 1 untersten Rohrbündel 9' des Luvos 9 verringert, so dass das den Rauchgaszug 4 verlassende Rauchgas (Pfeil 25) nur noch einen sehr kleinen Ammoniakgehalt aufweist, der unterhalb der festgelegten Grenzwerte liegt.

Die katalytische Wirkung im Rohrbündel 9' wird z.B. dadurch erreicht, dass gemäss Fig. 2 die Aussenfläche der einzelnen Rohre mit katalytischem Material beschichtet ist.

Anstelle einer solchen Beschichtung der Rohre ist es bei entsprechender Anordnung der Rohre gemäss Fig. 3 und 4 auch möglich, in die vom Rauchgas durchströmten Gassen zwischen den Rohrreihen dünne, gewellte Bleche 13 anzuordnen, die mit dem Katalysatormaterial beschichtet sind, wobei sich die Wellenberge und -täler im wesentlichen in Strömungsrichtung des Rauchgases erstrecken.

Gemäss Fig. 5 und 6 werden anstelle von Glattrohren berippte Rohre für das Bündel 9' des Luvos 9 verwendet, wobei der Katalysatorwerkstoff als Beschichtung auch auf den Rippen 14 angeordnet ist.

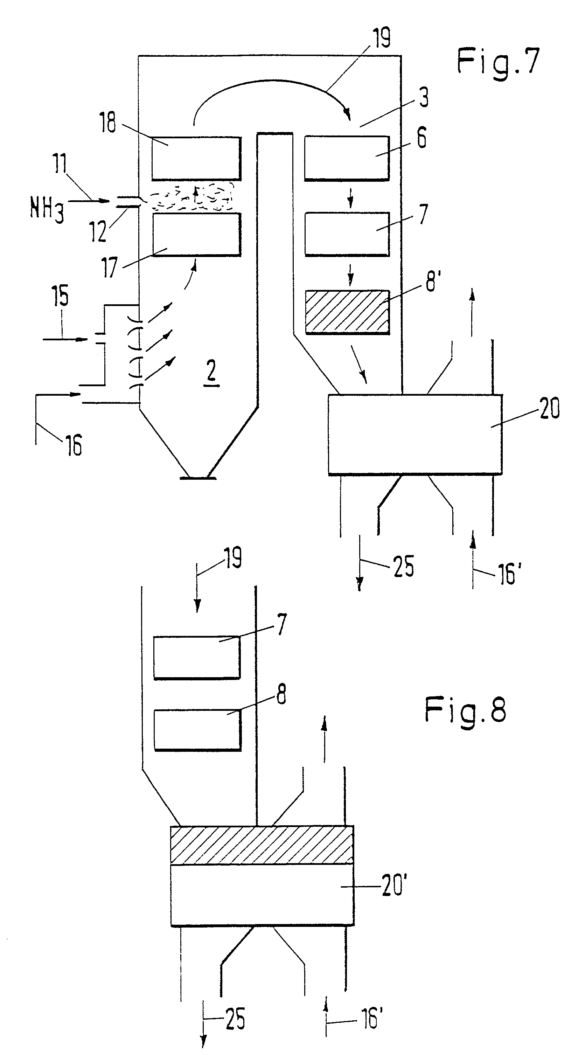

Bei der Dampferzeugungsanlage gemäss Fig. 7 wird in der Brennkammer 2 Kohlenstaub verbrannt, wobei die Brenner der Kohlenstaubfeuerung in der Vorderwand der Brennkammer 2 angeordnet sind. Die Kohlenstaubzufuhr ist durch den Pfeil 15 angedeutet, während der Pfeil 16 die Zufuhr von vorgewärmter Verbrennungsluft andeutet. Bei dieser Dampferzeugeranlage sind schon im oberen Teil der Bennkammer 2 Heizflächen 17 und 18 angeordnet, die in Form von die Brennkammer durchquerenden Rohren ausgebildet sind und eine Ueberhitzerheizfläche bzw. eine Nachverdampferheizfläche bilden können. Die Ammoniakzufuhr (Pfeil 11) geschieht wiederum mittels Düsen 12, die das Ammoniak in den freien Raum zwischen den Heizflächen 17 und 18 eindüsen. Die katalytisch wirksame Vorrichtung zum Verringern des Ammoniakschlupfes ist hier in dem untersten Rohrbündel 8' im Rauchgaszug 3 angeordnet, das eine Economiser-Heizfläche bildet. Die Ausbildung der Economiser-Rohre mit Katalysatorwirkung kann in der gleichen Weise geschehen, wie dies zu den Fig. 2 bis 6 erläutert wurde.

Das Rauchgas, das die Economiser-Heizfläche 8' umströmt hat, gelangt gemäss Fig. 7 in einen Regenerativ-Luftvorwärmer 20, in dem Rauchgaswärme an die Verbrennungsluft (Pfeil 16') übertragen wird. Das so abgekühlte Rauchgas (Pfeil 25) wird - bevor es zum Kamin gelangt, einem Staubfilter und eventuell einer Rauchgasentschwefelungsanlage (REA) zugeführt.

Die Dampferzeugungsanlage gemäss Fig. 8 ist hinsichtlich der Feuerung sowie der Heizflächen 6, 7, 17 und 18 gleich ausgebildet wie die gemäss Fig. 7. Die Economiser-Heizfläche 8 ist jedoch ohne Katalysator. Der Katalysator ist im Ausführungsbeispiel gemäss Fig. 8 im Regenerativ-Luftvorwärmer 20' angeordnet, und zwar als Beschichtung auf Wärmeaustauschblechen, was in Fig. 8 durch die Schraffur angedeutet ist. In dieser katalytisch wirkenden Vorrichtung findet das Verringern des Ammoniakschlupfes nicht allein im Rauchgasstrom durch die Reaktion des Ammoniaks mit anderen im Rauchgasstrom enthaltenen Stoffen statt, sondern zusätzlich dadurch, dass ein Teil des Ammoniaks in der katalytischen Schicht adsorptiv gespeichert, anschliessend durch die Rotationsbewegung des Regenerativluftvorwärmers in den Strom der Verbrennungsluft hinübergetragen, von dieser aufgenommen und dann in die Feuerung hineingetragen wird, wo die chemische Zersetzung stattfindet.

Der Rauchgas-Temperaturbereich, in dem die mit dem Katalysatormaterial verbundenen Heizflächen liegen, reicht von etwa 100° C bis 300° C.

## Ansprüche

1. Einrichtung zum Entsticken von Rauchgasen in einer fossil beheizten, mehrere nacheinander vom Rauchgasstrom umströmte Heizflächen aufweisenden Dampferzeugungsanlage, mit einer Vorrichtung zum Zuführen von auf Stickoxide reduzierend wirkenden und dabei einen Ammoniakrest übrig lassenden Chemikalien in den heissen Rauchgasstrom sowie mit einer dieser Zuführvorrichtung nachgeschalteten, katalytisch wirkenden Vorrichtung zum Verringern des Ammoniakrestes oder -schlupfes, dadurch **gekennzeichnet**, dass die katalytisch wirkende Vorrichtung rauchgasseitig in mindestens einer Heizfläche angeordnet ist.

2. Einrichtung nach Anspruch 1, dadurch gekennzeichnet, dass die katalytisch wirkende Vorrichtung in Form einer Beschichtung auf der Aussenfläche von Rohren der Heizfläche angebracht ist.

3. Einrichtung nach Anspruch 1, dadurch gekennzeichnet, dass die katalytisch wirkende Vorrichtung in Form beschichteter Bleche in Rohrgassen der Heizfläche angeordnet ist.

4. Einrichtung nach Anspruch 1, dadurch gekennzeichnet, dass die katalytisch wirkende Vorrichtung in Form einer Beschichtung auf der Aussenfläche eines Teils der Wärmeaustauschfläche eines regenerativen Luftvorwärmers angebracht ist.

Fig.1

Fig.2  Fig.3  Fig.5

Fig.4  Fig.6



Fig.7

Fig.8

Europäisches
Patentamt

**EUROPÄISCHER RECHERCHENBERICHT**

Nummer der Anmeldung

EP 89 81 0950

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 138 469 (KATO) <br> * Spalte 1, Zeilen 8-23; Spalte 2, Zeile 39 - Spalte 3, Zeile 11 * <br> --- | 1 | F 23 J 15/00 <br> B 01 D 53/36 |
| A | FR-A-2 552 857 (STEINMÜLLER) <br> * Seite 6, Zeile 6 - Seite 7, Zeile 34; Seite 10, Zeilen 1-13; Figuren 1-4 * <br> --- | 1-4 | |
| A | DE-A-3 442 967 (G.E.A. LUFTKÜHLERGESELLSCHAFT HAPPEL) <br> --- | | |
| A | EP-A-0 263 195 (NIPPON KOKAN K.K.) <br> --- | | |
| A | FACHREPORT RAUCHGASREINIGUNG, Band 38, Nr. 12, Februar 1986, Seiten FR19 - FR25; J. BECKER: "Möglichkeiten der Stickstoffoxidminderung durch SCR-Anlagen" <br> ----- | | |

RECHERCHIERTE SACHGEBIETE (Int. Cl.5)

F 23 J
B 01 D

Der vorliegende Recherchenbericht wurde für alle Patentansprüche erstellt

| Recherchenort | Abschlußdatum der Recherche | Prüfer |
|---|---|---|
| DEN HAAG | 30-03-1990 | PHOA Y.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes Dokument

EPO FORM 1503 03.82 (P0403)